(19) Europäisches Patentamt European Patent Office Office européen des brevets

(11) **EP 4 376 182 B1**

(12) **EUROPEAN PATENT SPECIFICATION**

(45) Date of publication and mention
of the grant of the patent:
**10.06.2026 Bulletin 2026/24**

(21) Application number: **22919857.7**

(22) Date of filing: **27.09.2022**

(51) International Patent Classification (IPC):
*H01M 50/204* (2021.01)   *B60L 50/64* (2019.01)
*B60L 58/19* (2019.01)   *B60L 58/21* (2019.01)
*B60L 58/24* (2019.01)   *H01M 10/613* (2014.01)
*H01M 10/625* (2014.01)   *H01M 10/647* (2014.01)
*H01M 50/213* (2021.01)   *H01M 50/209* (2021.01)

(52) Cooperative Patent Classification (CPC):
**H01M 50/204; B60L 50/64; B60L 58/19;**
**B60L 58/21; B60L 58/24; H01M 10/613;**
**H01M 10/625; H01M 10/647; H01M 50/209;**
**H01M 50/213;** B60L 2240/545; Y02E 60/10

(86) International application number:
**PCT/CN2022/121770**

(87) International publication number:
**WO 2023/134223 (20.07.2023 Gazette 2023/29)**

(54) **BATTERY PACK AND POWER CONSUMING DEVICE**

BATTERIEANORDNUNG UND ENERGIEVERBRAUCHENDES GERÄT

BLOC-BATTERIE ET DISPOSITIF CONSOMMATEUR D'ÉNERGIE ÉLECTRIQUE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **14.01.2022 PCT/CN2022/072095**

(43) Date of publication of application:
**29.05.2024 Bulletin 2024/22**

(73) Proprietor: **Contemporary Amperex Technology**
**(Hong Kong) Limited**
**Central, Central And Western District (HK)**

(72) Inventors:
• **HE, Jianfu**
**Ningde, Fujian 352100 (CN)**
• **LIU, Qian**
**Ningde, Fujian 352100 (CN)**
• **YE, Yonghuang**
**Ningde, Fujian 352100 (CN)**
• **LI, Quanguo**
**Ningde, Fujian 352100 (CN)**
• **XU, Xiaofu**
**Ningde, Fujian 352100 (CN)**
• **JIN, Haizu**
**Ningde, Fujian 352100 (CN)**

(74) Representative: **Gong, Jinping**
**CocreateIP**
**Neumarkter Straße 21**
**81673 München (DE)**

(56) References cited:
CN-A- 102 903 948       CN-A- 109 950 659
CN-A- 112 599 891       CN-U- 206 992 243
DE-A1- 102018 217 387    JP-A- 2004 303 456
JP-A- 2012 160 283       JP-A- 2012 160 283
US-A1- 2021 391 619

## Description

### Technical Field

The present application relates to the field of batteries, and in particular, to a battery pack as specified in any of claims 1-8 and a power consuming device comprising the battery pack as specified in claim 9.

### Background Art

In recent years, with the continuous development of secondary battery technology such as lithium-ion batteries, secondary batteries are widely used in energy storage power systems such as hydroelectric, thermal, wind and solar power plants, as well as electric tools, electric bicycles, electric motorcycles, electric vehicles, military equipment, aerospace and other fields.

Lithium-ion batteries are greatly affected by temperature. Especially, at a low temperature, battery cells are subjected to serious polarization, and the cut-off voltage is reached in advance in a discharge process, which leads to urgent problems such as small discharge energy and poor low-temperature power capability. As power of a battery pack increases, the difference in temperature rise between the interior of the battery pack and external regions further expands, making more power waste in the battery pack and affecting consumer experience.

Existing battery packs are provided with additional thermistors, which can use improved low-temperature performance but result in high costs and occupy space of the battery packs, reducing energy density. Also, low-temperature resistant batteries are arranged on the periphery to improve the overall low-temperature performance of the battery pack, but a differentiated chemical system is usually used, resulting in complex control of a battery management system BMS. Moreover, the low-temperature resistant batteries often have poor thermal stability, bringing about deterioration of the collision safety of the entire battery pack.

JP 2012 160283 A discloses a battery pack and a battery module.

US 2021/391619 A1 discloses a battery pack, a battery module including the battery pack, and a power supply device including the battery module.

DE 10 2018 217387 A1 discloses a method for manufacturing an electrical energy storage device comprising a plurality of electrical energy storage units.

### Summary of the Invention

The present application is provided in view of the above technical problems, and an objective of the present application is to provide a battery pack that can overcome the battery pack cask effect and increase the low-temperature discharge capability, and a power consuming device including the battery pack. The claimed subject-matter is defined by the appended claims.

In order to achieve the above objective, a first aspect of the present application provides a battery pack, including: a battery pack case; and first battery cells and second battery cells that are accommodated in the battery pack case, wherein compared with the second battery cells, the first battery cells are arranged at positions where heat exchange with surroundings is more likely to occur in the battery pack case. It is assumed that the first battery cells each have a capacity $C1$ and a direct-current impedance $R1$, wherein $X1 = C1*R1$, the second battery cells each have a capacity $C2$ and a direct-current impedance $R2$, wherein $X2 = C2*R2$, and $X1$ and $X2$ satisfy $1.1 \leq X1/X2 \leq 2.0$.

In this way, according to the present application, by arranging the first battery cells each having a high impedance $R1$ and a high capacity $C1$ at positions where heat exchange with surroundings is more likely to occur, the battery pack cask effect can be overcome and the low-temperature discharge capability can be increased.

In any embodiment, the direct-current impedance $R1$ of the first battery cell and the direct-current impedance $R2$ of the second battery cell satisfy: $1.0 < R1/R2 \leq 1.5$. In this way, the heat generated by the first battery cell during discharge is increased by increasing the impedance, leading to a lower polarization of the entire battery cell, thereby increasing the discharge capability.

In any embodiment, the capacity $C1$ of the first battery cell and the capacity $C2$ of the second battery cell satisfy: $1.00 < C1/C2 \leq 1.15$ when $1.0 < R1/R2 \leq 1.2$, and $1.15 < C1/C2 \leq 1.30$ when $1.2 < R1/R2 \leq 1.5$. In this way, a capacity ratio and an impedance ratio of the first battery cell and the second battery cell are within the above-mentioned range, such that the low-temperature discharge capability can be further increased.

In any embodiment, a specific heat capacity $\beta1$ of the first battery cell and a specific heat capacity $\beta2$ of the second battery cell satisfy: $0.10 \leq \beta1/\beta2 \leq 0.99$, and optionally satisfy $0.3 \leq \beta1/\beta2 \leq 0.95$. In this way, due to the low specific heat capacity of the first battery cell, it is easy to achieve a temperature rise under heat accumulation, such that the low-temperature discharge capability can be further increased.

In any embodiment, the first battery cells and the second battery cells are in series connection or in parallel connection or in series-parallel connection. In this way, a larger capacity or power can be achieved.

According to the first embodiment of the invention, the first battery cells and the second battery cells are arranged inside the battery pack case; the first battery cells and the second battery cells each comprise electrode terminals, the electrode terminals facing a top wall or a bottom wall of the battery pack case; and in a top view, the first battery cells are arranged around the second battery cells. In this way, the low-temperature discharge capability can be further increased.

According to the first embodiment of the invention, the first battery cells are arranged close to side walls of the battery pack case. In this way, the low-temperature discharge capability can be further increased.

According to the second embodiment of the invention, the first battery cells and the second battery cells are arranged inside the battery pack case; the first battery cells and the second battery cells each comprise electrode terminals, the electrode terminals facing side walls of the battery pack case; and at least part of the first battery cells are arranged on a bottom wall of the battery pack case. In this way, the low-temperature discharge capability can be further increased.

In a modified embodiment of the second embodiment, in the battery pack case, the first battery cells are arranged close to the side walls of the battery pack case. In this way, the low-temperature discharge capability can be further increased.

In any embodiment, the first battery cells and the second battery cells are battery cells with the same chemical system. In this way, the direct-current impedance and capacity of each battery cell can be adjusted easily.

A second aspect of the present application provides a power consuming device including the battery pack in the first aspect of the present application.

Thus, the power consuming device in the second aspect of the present application can be provided with an increased low-temperature discharge capability.

Effects of the Invention

According to the present application, by arranging the first battery cells each having a high impedance R1 and a high capacity C1 at positions where heat exchange with surroundings is more likely to occur, a battery pack that overcomes the battery pack cask effect and can increase the low-temperature discharge capability and a power consuming device including the battery pack can be provided.

## Brief Description of the Drawings

Fig. 1 is a schematic exploded view of an overall structure of a battery pack according to the first embodiment of the present application.

Fig. 2 is a schematic top view of the structure of the battery pack shown in Fig. 1 according to the first embodiment of the present application with a case removed.

Fig. 3 is a schematic exploded view of a battery cell (secondary battery) according to an example of the present application.

Fig. 4 is a schematic exploded view of an overall structure of a battery pack according to a second embodiment of the present application.

Fig. 5 shows a schematic exploded view of an overall structure of a battery pack according to a modified embodiment of the second embodiment of the present application.

Fig. 6 is a schematic diagram of a power consuming device using the battery pack according to an embodiment of the present application as a power source.

List of reference numerals:

1 - battery pack; 20 - battery pack case; 21 - upper case; 22 - lower case; 11 - first battery cell; 12 - second battery cell; 31 - housing; 32 - end cap; 33 - electrode assembly; 34 - electrode terminal;

## Detailed Description of Embodiments

Hereafter, implementations of the battery pack and the power consuming device of the present application are specifically disclosed in the detailed description with reference to the accompanying drawings as appropriate. However, unnecessary detailed illustrations may be omitted in some instances. For example, there are situations where detailed description of well-known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in claims.

"Ranges" disclosed in the present application are defined in the form of lower and upper limits, and a given range is defined by selection of a lower limit and an upper limit, the selected lower and upper limits defining the boundaries of the particular range. Ranges defined thus may be inclusive or exclusive, and may be arbitrarily combined, that is, any lower limit may be combined with any upper limit to form a range. For example, if the ranges of 60-120 and 80-110 are listed for a particular parameter, it should be understood that the ranges of 60-110 and 80-120 are also contemplated. Additionally, if minimum range values of 1 and 2 are listed, and maximum range values of 3, 4, and 5 are listed, the following ranges are all contemplated: 1-3, 1-4, 1-5, 2-3, 2-4 and 2-5. In the present application, unless stated otherwise, the numerical range "a-b" denotes an abbreviated representation of any combination of real numbers between a and b, where both a and b are real numbers. For example, the numerical range "0-5" means that all real numbers between "0-5" have been listed herein, and "0-5" is just an abbreviated representation of combinations of these numerical values. In addition, when a parameter is expressed as an integer of $\geq 2$, it is equivalent to disclosing that the parameter is, for example, an integer of 2, 3, 4, 5, 6, 7, 8, 9, 10, 11, 12, and the like.

All the embodiments and optional embodiments of the present application can be combined with one another to form new technical solutions, unless otherwise stated.

All technical features and optional technical features of the present application can be combined with one another to form a new technical solution, unless otherwise stated.

Unless otherwise stated, all the steps of the present application can be performed sequentially or randomly, preferably sequentially. For example, the method including steps (a) and (b) indicates that the method may include steps (a) and (b) performed sequentially, and may also include steps (b) and (a) performed sequentially. For example, reference to "the method may further include step (c)" indicates that step (c) may be added to the method in any order, e.g., the method may include steps (a), (b) and (c), steps (a), (c) and (b), or steps (c), (a) and (b).

The terms "comprise" and "include" mentioned in the present application are open-ended or closed-ended, unless otherwise stated. For example, the terms "comprising" and "including" may mean that other components not listed may also be comprised or included, or only the listed components may be comprised or included.

In the present application, the term "or" is inclusive unless otherwise specified. For example, the phrase "A or B" means "A, B, or both A and B." More specifically, a condition "A or B" is satisfied by any one of the following: A is true (or present) and B is false (or not present); A is false (or not present) and B is true (or present); or both A and B are true (or present).

At present, from the perspective of the development of the market form, the application of power batteries is more and more extensive. The traction batteries are not only used in energy storage power systems such as hydroelectric power plants, thermal power plants, wind power plants and solar power plants, but also widely used in electric transportation means such as electric bicycles, electric motorcycles and electric vehicles and in many fields such as military equipment and aerospace. With the continuous expansion of the application field of traction batteries, the market demand for the traction batteries is also expanding.

The inventors of the present application have noted that in a battery pack composed of secondary battery cells, because the same battery cells are closely arranged, the battery cells at positions where heat exchange with the outside is likely to occur in low-temperature surroundings reach a cut-off voltage early because of low temperature, causing the entire battery pack to stop discharging (i.e., the battery pack cask effect).

Then, the inventors of the present application have conceived the idea of arranging battery cells each having a high impedance R1 and a high capacity C1 at positions where heat exchange with the surroundings is more likely to occur, such that the battery pack cask effect can be overcome and the low-temperature discharge capability can be improved.

Battery pack

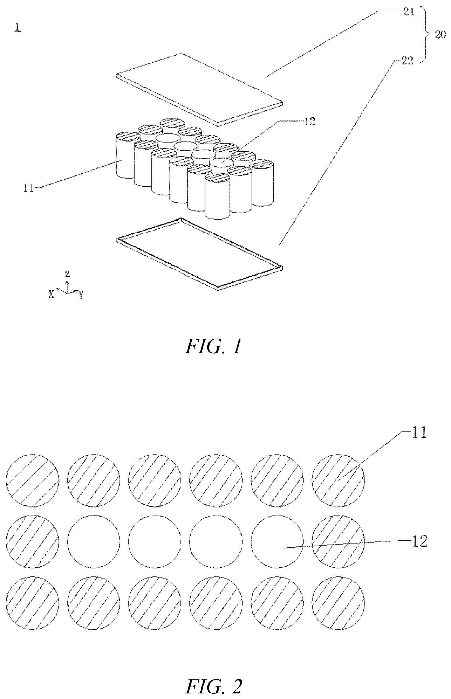

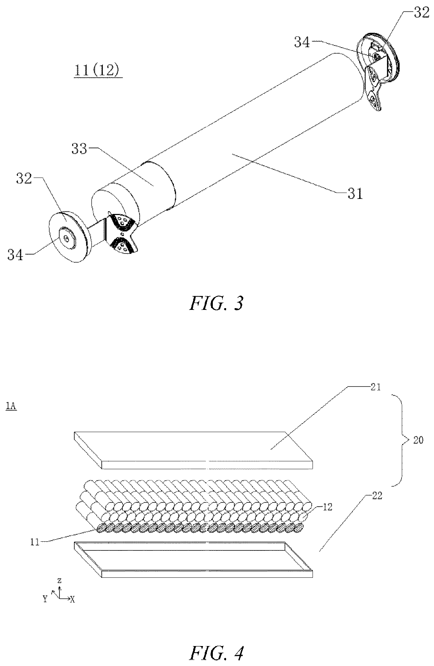

Fig. 1 is a schematic exploded view of an overall structure of a battery pack according to an embodiment of the present application. Fig. 2 is a schematic top view of the structure of the battery pack shown in Fig. 1 according to an embodiment of the present application with a case removed. Fig. 3 is a schematic exploded view of a battery cell (secondary battery) according to an embodiment of the present application.

The battery pack 1 of the present application, as shown in Fig. 1, may include a battery pack case 20 1 and a plurality of battery cells 11, 12 arranged inside the battery pack case 20. The battery pack case 20 may include an upper case 21 and a lower case 22, and the upper case 21 can cover the lower case 22 to form a closed space for accommodating the battery cells 11, 12.

In an embodiment of the present application, as shown in Fig. 1, the battery pack 1 includes: a battery pack case 20, and first battery cells 11 and second battery cells 12 that are accommodated inside the battery pack case 20, wherein compared with the second battery cells 12, the first battery cells 11 are arranged at positions where heat exchange with surroundings is more likely to occur in the battery pack case 20. It is assumed that the first battery cell 11 has a capacity C1 and a direct-current impedance R1, where X1 = C1*R1, the second battery cell 12 has a capacity C2 and a direct-current impedance R2, where X2 = C2*R2, and X1 and X2 satisfy $1.1 \leq X1/X2 \leq 2.0$. Here, the positions where heat exchange with the surroundings is more likely to occur may be, for example, the periphery and top and bottom surfaces of the battery pack case, or the positions having a larger area of heat exchange with the surroundings.

In the present application, the energy density of a battery cell is measured by the following method.

C: capacity of battery cell

An initial discharge capacity of a battery cell is defined as the capacity discharged at 0.33C from an upper cut-off voltage limit of each battery cell to a lower cut-off voltage limit of each battery cell at 25°C.

R: direct-current impedance

A battery cell is adjusted to 20% SOC at a rate of 0.33C, stands in a thermotank at -20°C for 2 hours, and is discharged for 30s with a constant current I. Then, a cell impedance is finally calculated based on an initial voltage V1, an end voltage V2 and a discharge current according to the

$$\text{formula } R = (V1-V2)/I.$$

Although the mechanism is not yet clear, the inventors of the present application have unexpectedly discovered: in the present application, compared with the second battery cells 12, the first battery cells 11 are arranged at positions where heat exchange with the surroundings is more likely to occur inside the battery pack case 20, and $1.1 \leq$ (C1*R1)/(C2*R2) $\leq 2.0$ is satisfied, such that the overall low-temperature discharge capability of the battery pack can be increased. The inventors of the present application supposed that the first battery cells 11 have high impedances and have a high temperature rise during discharge, which can compensate for the effect caused by low temperature of the surroundings, thereby reducing the polarization of the entire battery, and increasing the low-temperature discharge capability of the first battery cells 11. As the first battery cells are placed at positions where heat exchange with the surroundings is likely to occur, the battery pack cask effect, that is, the problem of reaching a cut-off potential early due to large polarization in a low-temperature region can be solved. On the other hand, the high capacity makes it possible to solve the problem of poor capacity performance due to the high impedance and increase the overall available capacity of the battery pack.

As shown in Fig. 1, the first battery cells 11 and the second battery cells 12 are arranged vertically inside the case. That is, the first battery cells 11 and the second battery cells 12 are arranged along directions X and Y, and may be stacked in a direction Z. The shape of the secondary battery is not particularly limited in the present application, and may be cylindrical, square or of any other shape. Fig. 3 is a schematic exploded view of a battery cell (secondary battery) according to an embodiment of the present application. Fig. 3 shows a secondary battery of a cylindrical structure as an example. The battery cells 11, 12 each may include a housing 31, end caps 32, and one or more electrode assemblies 33 arranged in the housing 31. The housing 31 may be a hollow cylinder, and the housing 31 has openings through which the one or more electrode assemblies 33 can be placed in the housing 31. The housing 31 may have an end face that is open, that is, this end face has no wall such that the inside of the housing 31 is in communication with the outside. The end caps 32 cover the openings and are connected to the housing 31 to form an enclosed cavity in which the electrode assemblies 33 are placed. A positive electrode plate, a negative electrode plate and a separator can be subjected to a winding process or a stacking process to form an electrode assembly 33. The electrode assembly 33 is packaged in the cavity. The housing 31 is filled with an electrolyte, such as an electrolytic solution. The battery cells 11, 12 each may further include two electrode terminals 34. The two electrode terminals 34 may be arranged on the end caps 32 and may protrude from the end caps 32 in directions away from the interior of each of the battery cells 11, 12.

The number of battery cells 11, 12 may be set as any numerical value depending on different power demands. The plurality of battery cells 11, 12 may be in series connection, in parallel connection or in series-parallel connection to achieve a higher capacity or power. For example, the plurality of battery cells 11, 12 are connected in series to form a group of battery cells. Multiple groups of battery cells are connected in parallel.

In some embodiments, as shown in Figs. 1 to 3, in the battery pack case 20, the first battery cells 11 and the second battery cells 12 are arranged inside the battery pack case 20; the first battery cells 11 and the second battery cells 12 each include electrode terminals 34, with the electrode terminals 34 facing a top wall and/or a bottom wall of the battery pack case 20; and in a top view, the first battery cells 11 are arranged around the second battery cells 12. Optionally, the first battery cells 11 are arranged close to side walls of the battery pack case 20. In this way, the first battery cells 11 are more likely to exchange heat with the surroundings, such that the low-temperature discharge capability can be further increased.

In some embodiments, the direct-current impedance R1 of the first battery cell and the direct-current impedance R2 of the second battery cell satisfy: $1.0 < R1/R2 \leq 1.5$. In this way, the heat generated by the first battery cell during discharge is increased by increasing the impedance, which can compensate for the effect of a low ambient temperature, leading to a lower polarization of the entire battery cell, thereby increasing the discharge capability.

In some embodiments, the capacity C1 of the first battery cell and the capacity C2 of the second battery cell satisfy: $1.00 < C1/C2 \leq 1.15$ when $1.0 < R1/R2 \leq 1.2$, and $1.15 < C1/C2 \leq 1.30$ when $1.2 < R1/R2 \leq 1.5$. A battery pack system operates on the basis of the cask effect, in a battery pack, the discharge energy of all other battery cells is determined by a battery cell that can discharge the minimum energy. Accordingly, it is required to ensure that the capacity of the first battery cell is not lower than the capacity of the second battery cell, which can increase the overall discharge energy of the battery pack. When the capacity of the first battery cell is too high, the excess energy in the first battery cell is too much to increase the overall discharge energy of the battery pack. The inventors of the present application have found that a capacity ratio and an impedance ratio of the first battery cell and the second battery cell satisfy the relationship mentioned above, such that the low-temperature discharge capability can be further increased. The reason for this is that the first battery cell has a lowered capacity performance due to its high impedance. In order to ensure that the battery pack maintains its original discharge capability, the capacity of the first battery cell needs to be increased (e.g. by increasing coating weight C.W., increasing the percentage of active materials in the positive and negative electrode formulations, and increasing the compacted density of electrode plates). The first battery cell with a higher impedance needs more capacity surplus amount of the first battery cell (a different between the capacity of the first battery cell and the capacity of the second battery cell). Conversely, the surplus amount can be reduced appropriately. The impedance of the first battery cell must not be too large, otherwise the battery cell itself may be over-polarized, a heat accumulation rate is lower than a voltage drop, and the low-temperature discharge capability of the battery pack gets deteriorated.

In some embodiments, a specific heat capacity $\beta 1$ of the first battery cell and a specific heat capacity $\beta 2$ of the second battery cell satisfy: $0.10 \leq \beta 1/\beta 2 \leq 0.99$, and optionally satisfy $0.3 \leq \beta 1/\beta 2 \leq 0.95$. In this way, due to the low specific heat capacity of the first battery cell, it is easy to achieve a temperature rise under heat accumulation, such that the low-temperature discharge capability can be further increased.

In the present application, the specific heat capacity $\beta$ of a battery cell is measured by the following method.

1) Specific heat capacity test device: Netzsch STA449F3
2) Specific heat capacity calculation method: the specific heat capacity of a battery cell is equal to the sum of the specific heat capacity values of various elements, including an active material (a positive electrode material/a negative electrode material) and an inactive material (a binder/conductive carbon/a current collector/a separator/-mechanical parts, etc.)
3) Specific heat capacity test method:
maintaining a sample chamber of a differential scanning calorimeter (DSC) empty at a certain heating rate and in an atmosphere, and testing a DSC curve, namely a baseline, to obtain a DSC value S0; then placing a standard sapphire with a mass m1 and a specific heat capacity C1 in the sample chamber and measuring the DSC curve to obtain a DSC value S1; and thereafter, removing the sapphire and replacing it with a test sample with a mass m2 and an unknown specific heat capacity C2, and testing the DSC curve to obtain a DSC value S2.

$$C2 = [(S2\text{-}S0)*m1]/[(S1\text{-}S0)*m2]*C1$$

In some embodiments, the first battery cells and the second battery cells are battery cells with the same chemical system. In this way, the direct-current impedance and capacity of each battery cell can be adjusted easily.

In some embodiments, the first battery cells and the second battery cells may be lithium-ion batteries, sodium-ion batteries or potassium-ion batteries. Thus, a wide range of secondary batteries with various chemical systems can be used to meet different needs.

Fig. 4 is a schematic exploded view of the overall structure of a battery pack 1A according to another embodiment of the present application. As shown in Fig. 4, the first battery cells 11 and the second battery cells 12 are provided inside the battery pack case 20; the first battery cells 11 and the second battery cells 12 each include electrode terminals 34, with the electrode terminals 34 facing a side wall of the battery pack case 20; and at least part of the first battery cells 11 are arranged on a bottom wall of the battery pack case 20. In this way, the first battery cells 11, arranged on the bottom wall of the battery pack case, are likely to exchange heat with the surroundings, which can further increase the low-temperature discharge capability.

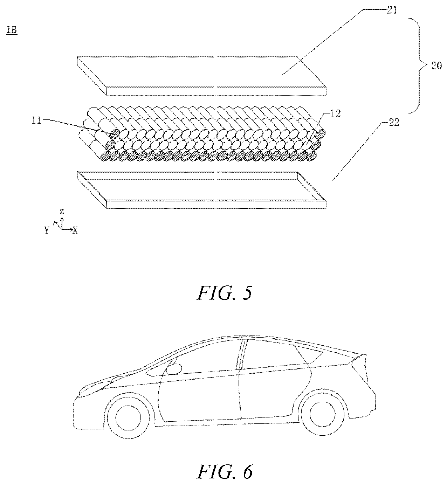

Fig. 5 is a schematic exploded diagram of the overall structure of a battery pack 1B according to another embodiment of the present application. Compared with the battery pack 1A shown in Fig. 4, optionally, the first battery cells 11 are also arranged close to side walls of the battery pack case. In this way, the first battery cells 11 are more likely to exchange heat with the surroundings, such that the low-temperature discharge capability can be further increased.

In addition, the secondary battery, battery pack, and power consuming device of the present application will be described below by appropriately referring to the accompanying drawings.

In one embodiment of the present application, a secondary battery is provided. This embodiment is not part of the claimed subject-matter but is useful for understanding the invention.

Typically, a secondary battery includes a positive electrode plate, a negative electrode plate, an electrolyte, and a separator. During a charge/discharge process of the battery, active ions are intercalated and de-intercalated back and forth between a positive electrode plate and a negative electrode plate. The electrolyte serves to conduct ions between the positive electrode plate and the negative electrode plate. The separator is arranged between the positive electrode plate and the negative electrode plate, and mainly functions to prevent the positive and negative electrodes from short-circuiting and enables ions to pass through.

[Positive electrode plate]

The positive electrode plate includes a positive electrode current collector and a positive electrode film layer arranged on at least one surface of the positive electrode current collector, the positive electrode film layer including the positive electrode active material of the first aspect of the present application.

As an example, the positive current collector has two surfaces opposite one another in its own thickness direction, and the positive film layer is arranged on either or both of the opposite surfaces of the positive current collector.

In some embodiments, the positive electrode current collector can be a metal foil or a composite current collector. For example, as a metal foil, an aluminum foil can be used. The composite current collector may include a polymer material substrate and a metal layer formed on at least one surface of the polymer material substrate. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In some embodiments, the positive active material may be a positive active material known in the art for batteries. As an example, the positive electrode active material may include at least one of the following materials: lithium-containing phosphates of an olivine structure, lithium transition metal oxides and their respective modified compounds. However, the present application is not limited to these materials, and other conventional materials that can be used as positive electrode active materials for batteries may also be used. These positive electrode active materials may be used alone or in combination of two or more. Herein, examples of lithium transition metal oxides may include, but are not limited to, at least one of lithium cobalt oxide (e.g. $LiCoO_2$), lithium nickel oxide (e.g. $LiNiO_2$), lithium manganese oxide (e.g. $LiMnO_2$, $LiMn_2O_4$), lithium nickel cobalt oxide, lithium manganese cobalt oxide, lithium nickel manganese oxide, lithium nickel cobalt manganese oxide (e.g. $LiNi_{1/3}Co_{1/3}Mn_{1/3}O_2$ (also referred to as $NCM_{333}$), $LiNi_{0.5}Co_{0.2}Mn_{0.3}O_2$ (also referred to as $NCM_{523}$), $LiNi_{0.5}Co_{0.25}Mn_{0.25}O_2$ (also referred to as $NCM_{211}$), $LiNi_{0.6}Co_{0.2}Mn_{0.2}O_2$ (also referred to as $NCM_{622}$), $LiNi_{0.8}Co_{0.1}Mn_{0.1}O_2$ (also referred to as $NCM_{811}$)), lithium nickel cobalt aluminum oxide (e.g. $LiNi_{0.85}Co_{0.15}Al_{0.05}O_2$), and modified compounds thereof, and the like. Examples of lithium-containing phosphates of olivine structure may include, but are not limited to, at least one of lithium iron phosphate (e.g. $LiFePO_4$ (also referred to as LFP)), lithium iron phosphate and carbon composites, lithium manganese phosphate (e.g. $LiMnPO_4$), lithium manganese phosphate and carbon composites, lithium iron manganese phosphate, and lithium iron manganese phosphate and carbon composites.

In some embodiments, the positive film layer may optionally comprise a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer also optionally comprises a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate can be prepared as follows: dispersing the above-described components for preparing the positive electrode plate, such as a positive active material, a conductive agent, a binder and any other components, in a solvent (e.g., N-methylpyrrolidone) to form a positive slurry; and coating the positive electrode current collector with the positive electrode slurry, followed by the procedures such as drying and cold pressing to obtain the positive electrode plate.

[Negative electrode plate]

The negative electrode plate includes a negative electrode current collector and a negative electrode film layer arranged on at least one surface of the negative electrode current collector, the negative electrode film layer including a negative electrode active material.

As an example, the negative electrode current collector has two surfaces opposite one another in its own thickness direction, and the negative electrode film layer is provided on either or both of the two opposite surfaces of the negative electrode current collector.

In some embodiments, the negative electrode current collector can be a metal foil or a composite current collector. For example, as a metal foil, a copper foil can be used. The composite current collector may comprise a polymer material substrate and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode active material can be a negative electrode active material known in the art for batteries. As an example, the negative electrode active material may include at least one of the following materials: artificial graphite, natural graphite, soft carbon, hard carbon, a silicon-based material, a tin-based material and lithium titanate, etc. The silicon-based material may be selected from at least one of elemental silicon, silicon oxides, silicon carbon composites, silicon nitrogen composites and silicon alloys. The tin-based material may be selected from at least one of elemental tin, tin oxides, and tin alloys. However, the present application is not limited to these materials, and other conventional materials that can be used as negative electrode active materials for batteries can also be used. These negative electrode active materials may be used alone or in combination of two or more.

In some embodiments, the negative electrode film layer may optionally comprise a binder. The binder may be selected from at least one of a butadiene styrene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS).

In some embodiments, the negative electrode film layer may optionally comprise a conductive agent. The conductive agent may be selected from at least one of superconductive carbon, acetylene black, carbon black, ketjenblack, carbon dots, carbon nanotubes, graphene, and carbon nanofibers.

In some embodiments, the negative electrode film layer may optionally comprise other auxiliary agents, such as thickener (e.g. sodium carboxymethyl cellulose (CMC-Na)) and the like.

In some embodiments, the negative electrode plate can be prepared as follows: dispersing the above-mentioned components for preparing the negative electrode plate, such as negative electrode active material, conductive agent, binder and any other components, in a solvent (e.g. deionized water) to form a negative electrode slurry; and coating a negative electrode current collector with the negative electrode slurry, followed by procedures such as drying and cold pressing, so as to obtain the negative electrode plate.

[Electrolyte]

The electrolyte serves to conduct ions between the positive electrode plate and the negative electrode plate. The type of the electrolyte is not specifically limited in the present application, and can be selected according to actual requirements. For example, the electrolyte may be in a liquid state, a gel state or an all-solid state.

In some implementations, the electrolyte is an electrolyte solution. The electrolyte solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolytic solution may optionally include an additive. For example, the additive may include a negative electrode film-forming additive and a positive electrode film-forming additive, and may further include an additive that can improve certain performances of the battery, such as an additive that improves the overcharge performance of the battery, or an additive that improves the high temperature or low-temperature performance of the battery.

[Separator]

In some embodiments, the secondary battery further includes a separator. The type of the separator is not particularly limited in the present application, and any well known porous-structure separator with good chemical stability and mechanical stability may be selected.

In some embodiments, the material of the separator may be selected from at least one of glass fibers, non-woven fabrics, polyethylene, polypropylene and polyvinylidene fluoride. The separator may be either a single-layer film or a multi-layer composite film, and is not limited particularly. When the separator is a multi-layer composite film, the materials in the respective layers may be same or different, which is not limited particularly.

In some embodiments, the positive electrode plate, the negative electrode plate and the separator can be made into the electrode assembly by a winding process or a lamination process.

In some embodiments, the secondary battery may comprise an outer package. The outer package can be used to encapsulate the above-mentioned electrode assembly and electrolyte.

In some implementations, the outer package of the secondary battery may be a hard shell, such as a hard plastic shell, an aluminum shell, or a steel shell. The outer package of the secondary battery may also be a soft bag, such as a pouch-type soft bag. The material of the soft bag may be plastics, and the examples of plastics may include polypropylene, polybutylene terephthalate, polybutylene succinate, etc.

In addition, the present application further provides a power consuming device. The power consuming device includes at least one of the secondary battery, battery module, or battery pack provided by the present application. The secondary battery, battery module or battery pack can be used as a power source of the power consuming device or as an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck), an electric train, ship, and satellite, an energy storage system, and the like, but is not limited thereto.

As for the power consuming device, the secondary battery, battery module or battery pack can be selected according to the usage requirements thereof.

Fig. 6 shows a power consuming device as an example. The power consuming device may be a pure electric vehicle, a hybrid electric vehicle, a plug-in hybrid electric vehicle or the like. In order to meet the requirements of the power consuming device for a high power and a high energy density of a secondary battery, a battery pack or a battery module may be used.

As another example, the power consuming device may be a mobile phone, a tablet computer, a laptop computer, etc. It is generally required that the power consuming device is thin and light, and the secondary battery may be used as a power supply.

Examples

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product introduction. The reagents or instruments used therein for which manufacturers are not specified are all conventional products that are commercially available.

(I) Preparation of battery cells

[Preparation example 1]

1) Preparation of a positive electrode plate

A first positive electrode active material $LiNi_{0.6}Co_{0.2}Mn_{0.2}O_2$ used as a positive electrode active material, super-conductive carbon black SP used as a conductive agent, and polyvinylidene fluoride (PVDF) used as a binder were dispersed in N-methylpyrrolidone (NMP) used as a solvent and mixed uniformly to obtain a positive electrode slurry; and after being coated with the positive electrode slurry, a positive electrode current collector aluminum foil is then dried, cold pressed, slit, and cut to obtain the positive electrode plate.

A mass ratio of the positive electrode active material to conductive carbon black to the binder PVDF was 96 : 2 : 2.

2) Preparation of a negative electrode plate

A negative electrode active material graphite, super-conductive carbon black SP used as a conductive agent, SBR used as a binder, and CMC-Na used as a thickener were dispersed in deionized water used as a solvent in a mass ratio of 96 : 1 : 1 : 2 and are mixed uniformly to obtain a negative electrode slurry; and the negative electrode slurry is evenly coated onto a negative electrode current collector copper foil, and is subjected to drying, cold pressing, slitting and cutting, so as to obtain the negative electrode plate.

3) Separator

A polyethylene film is selected as the separator.

4) Preparation of electrolyte solution

Ethylene carbonate (EC), dimethyl carbonate (DMC), and diethyl carbonate (DEC) were mixed uniformly in a volume ratio of 1 : 1 : 1 to obtain an organic solvent, and then fully dried lithium salt $LiPF_6$ was dissolved in the mixed organic solvent, to obtain an electrolyte with a concentration of 1 mol/L.

5) Preparation of battery cells

The above positive electrode plate, separator, and negative electrode plate are stacked in sequence, such that the separator is located between the positive electrode plate and the negative electrode plate to play a role of isolation, and are then wound to obtain a bare cell; and the bare cell is placed in an outer package casing and dried, and then the electrolyte solution is injected, followed by procedures such as vacuum encapsulation, standing, forming and shaping, to obtain a battery cell A1.

[Preparation examples 2-12]

Except that the ratio of an active material and a conductive agent is adjusted so that parameters of the battery cells meet those shown in Table 2 later, the same operation as in the preparation of Example 1 is used to obtain battery cells A2 to A12.

(II) Assembly of a battery pack

[Example 1]

As shown in Fig. 2, battery cells A2 are configured on the outer periphery of the battery pack case as the first battery cells 11, and second battery cells A1 are configured on the inner side as the second battery cells 12, such that a battery pack is assembled. A ratio of the number of the first battery cells 11 to the second battery cells 12 is 7 : 2.

[Examples 2-9 and comparative examples 1-3]

The first battery cells 11 and the second battery cells are assembled to form the battery pack, and operate as the same as in example 1 except that different battery cells are used as the first battery cells and the second battery cells as shown in Table 1.

Table 1 Components of battery pack

| No. | First battery cells | Second battery cells |
|---|---|---|
| Example 1 | Battery cells A2 | Battery cells A1 |
| Example 2 | Battery cells A3 | Battery cells A1 |
| Example 3 | Battery cells A4 | Battery cells A1 |
| Example 4 | Battery cells A5 | Battery cells A1 |
| Example 5 | Battery cells A6 | Battery cells A1 |
| Example 6 | Battery cells A5 | Battery cells A7 |
| Example 7 | Battery cells A10 | Battery cells A1 |
| Example 8 | Battery cells A11 | Battery cells A1 |
| Example 9 | Battery cells A12 | Battery cells A1 |
| Comparative example 1 | Battery cells A7 | Battery cells A7 |
| Comparative example 2 | Battery cells A8 | Battery cells A1 |
| Comparative example 3 | Battery cells A9 | Battery cells A1 |

(III) Performance test results of battery cells and battery pack

1. Performance test results of battery cells

Performance parameters of the battery cells A1 to A12 were measured by the foregoing methods, and the measurement and calculation results of each battery cell are shown in Table 2.

Table 2 Performance parameters of battery cells

|  | R (mohm) | C (Ah) | β_J/(kg • K) |
|---|---|---|---|
| Battery cells A1 | 20 | 60 | 950 |
| Battery cells A2 | 21 | 63 | 800 |
| Battery cells A3 | 24 | 68 | 800 |
| Battery cells A4 | 23 | 65 | 800 |
| Battery cells A5 | 28 | 72 | 800 |
| Battery cells A6 | 28 | 72 | 700 |
| Battery cells A7 | 20 | 60 | 800 |
| Battery cells A8 | 35 | 72 | 800 |
| Battery cells A9 | 56 | 72 | 800 |
| Battery cells A10 | 33 | 72 | 800 |
| Battery cells A11 | 28 | 63 | 800 |
| Battery cells A12 | 21 | 72 | 800 |

2. Performance test results of battery pack

(1) Energy retention rate at 0°C

The energy retention rate at 0°C was evaluated for the battery packs of examples 1 to 9 and comparative examples 1 to 3.
The evaluation steps are as follows:

1) Rated energy of battery pack: the battery pack that is fully charged stands in the thermotank at 25°C for 2 hours and is discharged to a lower cut-off voltage limit of the battery pack at a rate of 0.33C, and then an energy value E3 is recorded.

2) Energy retention rate of battery pack at 0°C: the battery pack that is full charged stands in the thermotank at 0°C for 2 hours and is discharged to a lower cut-off voltage limit of the battery pack at a rate of 0.33C, and then an energy value E4 is recorded, and the ratio of E4/E3 is recorded as the energy retention rate of the battery pack at 0°C.

Table 3 Examples 1-9 and comparative examples 1-3

| No. | R1( mohm) | R2( mohm) | C1( Ah) | C2(Ah) | β1_ J/(kg • K) | β2_ J/(kg • K) | R1/ R2 | C1/ C2 | X1/ X2 | β1/β2 | Energy retention rate of battery pack at 0°C |
|---|---|---|---|---|---|---|---|---|---|---|---|
| Example 1 | 21 | 20 | 63 | 60 | 800 | 950 | 1.05 | 1.05 | 1.10 | 0.84 | 77.5% |
| Example 2 | 24 | 20 | 68 | 60 | 800 | 950 | 1.20 | 1.13 | 1.36 | 0.84 | 78.6% |
| Example 3 | 23 | 20 | 65 | 60 | 800 | 950 | 1.15 | 1.08 | 1.25 | 0.84 | 78.3% |
| Example 4 | 28 | 20 | 72 | 60 | 800 | 950 | 1.40 | 1.20 | 1.68 | 0.84 | 78.5% |

(continued)

| No. | R1( mohm) | R2( mohm) | C1( Ah) | C2(Ah) | β1_ J/(kg • K) | β2_ J/(kg • K) | R1/ R2 | C1/ C2 | X1/ X2 | β1/β2 | Energy retention rate of battery pack at 0°C |
|---|---|---|---|---|---|---|---|---|---|---|---|
| Example 5 | 28 | 20 | 72 | 60 | 700 | 950 | 1.40 | 1.20 | 1.68 | 0.74 | 79.4% |
| Example 6 | 28 | 20 | 72 | 60 | 800 | 800 | 1.40 | 1.20 | 1.68 | 1.00 | 77.3% |
| Example 7 | 33 | 20 | 72 | 60 | 800 | 950 | 1.65 | 1.20 | 2.0 | 0.84 | 75.3% |
| Example 8 | 28 | 20 | 63 | 60 | 800 | 950 | 1.40 | 1.05 | 1.47 | 0.84 | 75.5% |
| Example 9 | 21 | 20 | 72 | 60 | 800 | 950 | 1.05 | 1.20 | 1.26 | 0.84 | 75.4% |
| Comparative example 1 | 20 | 20 | 60 | 60 | 800 | 800 | 1.00 | 1.00 | 1.00 | 1.00 | 75.0% |
| Comparative example 2 | 35 | 20 | 72 | 60 | 800 | 950 | 1.75 | 1.20 | 2.10 | 0.84 | 71.0% |
| Comparative example 3 | 56 | 20 | 72 | 60 | 800 | 950 | 2.80 | 1.20 | 3.36 | 0.84 | 51.0% |

(IV) Comparison of test results of examples and comparative examples

From the results in Table 3 above, it can be seen that, in examples 1-9, X1/X2 satisfies $1.1 \leq X1/X2 \leq 2.0$, and the energy retention rate of the battery pack at 0°C exceeds 75% in all the examples. In comparative examples 1-3, the X1/X2 is not within the above range, and the battery pack has a lower energy retention at 0°C.

In addition, from the results in Table 3 above, it can be seen that in examples 1-6 and 8-9, R1/R2 satisfies $1.0 < R1/R2 \leq 1.5$, and the battery pack has a higher energy retention rate at 0°C.

Furthermore, from the results in Table 3 above, it can be seen that in examples 1-6, R1, R2, C1, and C2 satisfy: $1.00 < C1/C2 \leq 1.15$ when $1.0 < R1/R2 \leq 1.2$, and $1.15 < C1/C2 \leq 1.30$ when $1.2 < R1/R2 \leq 1.5$, and the battery pack has a higher energy retention rate at 0°C. In examples 8 and 9, R1, R2, C1, and C2 do not satisfy the above relationship, and their energy retention rate at 0°C is lower compared with that in examples 1- 6.

In addition, from the comparison between examples 4-5 and example 6 in Table 3, it can be seen that by setting β1/β2 to $0.10 \leq β1/β2 \leq 0.99$ when the value of X1/X2 is the same, the energy retention rate of the battery pack at 0°C can be increased.

## Claims

1.  A battery pack (1), comprising:

    a battery pack case (20); and
    first battery cells (11) and second battery cells (12) that are accommodated and arranged inside the battery pack case (20), wherein
    compared with the second battery cells (12), the first battery cells (11) are arranged at positions where heat exchange with surroundings is more likely to occur in the battery pack case (20),
    the first battery cells (11) and the second battery cells (12) each comprise electrode terminals (34), the electrode terminals (34) facing a top wall and/or a bottom wall of the battery pack case (34); and in a top view, the first battery cells (11) are arranged around the second battery cells (12), wherein the first battery cells (11) are arranged close to side walls of the battery pack case (20),
    it is assumed that the first battery cells (11) each have a capacity C1 and a direct-current impedance R1, and the second battery cells (12) each have a capacity C2 and a direct-current impedance R2, **characterized in that** X1 = C1*R1 and X2 = C2*R2, and X1 and X2 satisfy: $1.1 \leq X1/X2 \leq 2 .0$

2.  A battery pack (1), comprising:

a battery pack case (20); and

first battery cells (11) and second battery cells (12) that are accommodated and arranged inside the battery pack case (20), wherein

compared with the second battery cells (12), the first battery cells (11) are arranged at positions where heat exchange with surroundings is more likely to occur in the battery pack case (20),

the first battery cells (11) and the second battery cells (12) each comprise electrode terminals (34), the electrode terminals (34) facing side walls of the battery pack case (20); and at least part of the first battery cells (11) are arranged on a bottom wall of the battery pack case (20);

it is assumed that the first battery cells (11) each have a capacity C1 and a direct-current impedance R1, and the second battery cells (12) each have a capacity C2 and a direct-current impedance R2, **characterized in that** X1 = C1*R1 and X2 = C2*R2, and X1 and X2 satisfy: $1.1 \leq X1/X2 \leq 2.0$

3. The battery pack (1) according to claim 1 or claim 2, wherein
the direct-current impedance R1 of the first battery cell (11) and the direct-current impedance R2 of the second battery cell (12) satisfy: $1.0 < R1/R2 \leq 1.5$.

4. The battery pack (1) according to any one of claims 1to 3, wherein

the capacity C1 of the first battery cell and the capacity C2 of the second battery cell (12) satisfy: $1.00 < C1/C2 \leq 1.15$ when $1.0 < R1/R2 \leq 1.2$, and
$1.15 < C1/C2 \leq 1.30$ when $1.2 < R1/R2 \leq 1.5$.

5. The battery pack (1) according to any one of claims 1 to 4, wherein
a specific heat capacity $\beta1$ of the first battery cell (11) and a specific heat capacity $\beta2$ of the second battery cell (12) satisfy: $0.10 \leq \beta1/\beta2 \leq 0.99$, and optionally satisfy $0.3 \leq \beta1/\beta2 \leq 0.95$.

6. The battery pack (1) according to any one of claims 1 to 5, wherein
the first battery cells (11) and the second battery cells (12) are in series connection or in parallel connection or in series-parallel connection.

7. The battery pack (1) according to any one of claims 2 to 6, wherein
the first battery cells (11) are arranged close to the side walls of the battery pack case (20).

8. The battery pack (1) according to any one of claims 1 to 7, wherein
the first battery cells (11) and the second battery cells (12) are battery cells with the same chemical system.

9. A power consuming device, comprising the battery pack (1) according to any one of claims 1 to 8.

**Patentansprüche**

1. Batteriepack (1), Folgendes umfassend:

ein Batteriepackgehäuse (20); und

erste Batteriezellen (11) und zweite Batteriezellen (12), die innerhalb des Batteriepackgehäuses (20) untergebracht und angeordnet sind, wobei

die ersten Batteriezellen (11) im Vergleich zu den zweiten Batteriezellen (12) an Positionen angeordnet sind, an denen ein Wärmeaustausch mit einer Umgebung in dem Batteriepackgehäuse (20) wahrscheinlicher auftritt,

die ersten Batteriezellen (11) und die zweiten Batteriezellen (12) jeweils Elektrodenanschlüsse (34) umfassen, wobei die Elektrodenanschlüsse (34) einer oberen Wand und/oder einer unteren Wand des Batteriepackgehäuses (34) zugewandt sind; und in einer Draufsicht die ersten Batteriezellen (11) um die zweiten Batteriezellen (12) herum angeordnet sind, wobei die ersten Batteriezellen (11) nahe an Seitenwänden des Batteriepackgehäuses (20) angeordnet sind,

davon ausgegangen wird, dass die ersten Batteriezellen (11) jeweils eine Kapazität C1 und eine Gleichstromimpedanz R1 aufweisen, und

die zweiten Batteriezellen (12) jeweils eine Kapazität C2 und eine Gleichstromimpedanz R2 aufweisen, **dadurch gekennzeichnet, dass** X1 = C1*R1 und

X2 = C2*R2, und dass X1 und X2 Folgendes erfüllen: $1,1 \leq X1/X2 \leq 2,0$

**2.** Batteriepack (1), Folgendes umfassend:

ein Batteriepackgehäuse (20); und
erste Batteriezellen (11) und zweite Batteriezellen (12), die innerhalb des Batteriepackgehäuses (20) untergebracht und angeordnet sind, wobei
die ersten Batteriezellen (11) im Vergleich zu den zweiten Batteriezellen (12) an Positionen angeordnet sind, an denen ein Wärmeaustausch mit einer Umgebung in dem Batteriepackgehäuse (20) wahrscheinlicher auftritt,
die ersten Batteriezellen (11) und die zweiten Batteriezellen (12) jeweils Elektrodenanschlüsse (34) umfassen, wobei die Elektrodenanschlüsse (34) Seitenwänden des Batteriepackgehäuses (20) zugewandt sind; und
mindestens ein Teil der ersten Batteriezellen (11) an einer Bodenwand des Batteriepackgehäuses (20) angeordnet ist;
davon ausgegangen wird, dass die ersten Batteriezellen (11) jeweils eine Kapazität C1 und eine Gleichstromimpedanz R1 aufweisen, und
die zweiten Batteriezellen (12) jeweils eine Kapazität C2 und eine Gleichstromimpedanz R2 aufweisen, **dadurch gekennzeichnet, dass** $X1 = C1*R1$ und
$X2 = C2*R2$, und dass X1 und X2 Folgendes erfüllen: $1{,}1 \leq X1/X2 \leq 2{,}0$

**3.** Batteriepack (1) nach Anspruch 1 oder 2, wobei
die Gleichstromimpedanz R1 der ersten Batteriezelle (11) und die Gleichstromimpedanz R2 der zweiten Batteriezelle (12) Folgendes erfüllt: $1{,}0 < R1/R2 \leq 1{,}5$.

**4.** Batteriepack (1) nach einem der Ansprüche 1 bis 3, wobei
die Kapazität C1 der ersten Batteriezelle und die Kapazität C2 der zweiten Batteriezelle (12) Folgendes erfüllen:

$1{,}00 < C1/C2 \leq 1{,}15$, wenn $1{,}0 < R1/R2 \leq 1{,}2$, und
$1{,}15 < C1/C2 \leq 1{,}30$, wenn $1{,}2 < R1/R2 \leq 1{,}5$.

**5.** Batteriepack (1) nach einem der Ansprüche 1 bis 4, wobei
eine spezifische Wärmekapazität $\beta1$ der ersten Batteriezelle (11) und eine spezifische Wärmekapazität $\beta2$ der zweiten Batteriezelle (12) Folgendes erfüllen: $0{,}10 \leq \beta1/\beta2 \leq 0{,}99$ und optional $0{,}3 \leq \beta1/\beta2 \leq 0{,}95$ erfüllen.

**6.** Batteriepack (1) nach einem der Ansprüche 1 bis 5, wobei
die ersten Batteriezellen (11) und die zweiten Batteriezellen (12) in Reihenschaltung oder in Parallelschaltung oder in Reihenparallelschaltung sind.

**7.** Batteriepack (1) nach einem der Ansprüche 2 bis 6, wobei
die ersten Batteriezellen (11) nahe den Seitenwänden des Batteriepackgehäuses (20) angeordnet sind.

**8.** Batteriepack (1) nach einem der Ansprüche 1 bis 7, wobei
die ersten Batteriezellen (11) und die zweiten Batteriezellen (12) Batteriezellen mit dem gleichen chemischen System sind.

**9.** Leistung verbrauchende Vorrichtung, die den Batteriepack (1) nach einem der Ansprüche 1 bis 8 umfasst.

**Revendications**

**1.** Bloc-batterie (1), comprenant :

un boîtier de bloc-batterie (20) ; et
des premiers éléments de batterie (11) et des seconds éléments de batterie (12) qui sont logés et disposés à l'intérieur du boîtier de bloc-batterie (20), dans lequel
comparés aux seconds éléments de batterie (12), les premiers éléments de batterie (11) sont disposés à des endroits où l'échange de chaleur avec l'environnement est plus susceptible de se produire dans le boîtier de bloc-batterie (20),
les premiers éléments de batterie (11) et les seconds éléments de batterie (12) comprennent chacun des bornes d'électrode (34), les bornes d'électrode (34) faisant face à une paroi supérieure et/ou à une paroi inférieure du boîtier de bloc-batterie (34) ; et, en vue de dessus, les premiers éléments de batterie (11) sont disposés autour des

14

seconds éléments de batterie (12), les premiers éléments de batterie (11) étant disposés à proximité des parois latérales du boîtier de bloc-batterie (20),

on suppose que les premiers éléments de batterie (11) ont chacun une capacité C1 et une impédance en courant continu R1 et

que les seconds éléments de batterie (12) ont chacun une capacité C2 et une impédance en courant continu R2, **caractérisé en ce que** X1 = C1*R1 et

X2 = C2*R2, et X1 et X2 vérifient : $1,1 \leq X1/X2 \leq 2,0$.

2. Bloc-batterie (1), comprenant :

un boîtier de bloc-batterie (20) ; et

des premiers éléments de batterie (11) et des seconds éléments de batterie (12) qui sont logés et disposés à l'intérieur du boîtier de bloc-batterie (20), dans lequel

comparés aux seconds éléments de batterie (12), les premiers éléments de batterie (11) sont disposés à des endroits où l'échange de chaleur avec l'environnement est plus susceptible de se produire dans le boîtier de bloc-batterie (20),

les premiers éléments de batterie (11) et les seconds éléments de batterie (12) comprennent chacun des bornes d'électrode (34), les bornes d'électrode (34) faisant face à une paroi latérale du boîtier de bloc-batterie (20) ; et au moins une partie des premiers éléments de batterie (11) sont disposés sur une paroi inférieure du boîtier de bloc-batterie (20) ;

on suppose que les premiers éléments de batterie (11) ont chacun une capacité C1 et une impédance en courant continu R1 et

que les seconds éléments de batterie (12) ont chacun une capacité C2 et une impédance en courant continu R2, **caractérisé en ce que** X1 = C1*R1 et

X2 = C2*R2, et X1 et X2 vérifient : $1,1 \leq X1/X2 \leq 2,0$.

3. Bloc-batterie (1) selon la revendication 1 ou la revendication 2, dans lequel l'impédance en courant continu R1 du premier élément de batterie (11) et l'impédance en courant continu R2 du second élément de batterie (12) vérifient : $1,0 \leq R1/R2 \leq 1,5$.

4. Bloc-batterie (1) selon l'une quelconque des revendications 1 à 3, dans lequel la capacité C1 du premier élément de batterie et la capacité C2 du second élément batterie (12) vérifient :

$1,00 < C1/C2 \leq 1,15$ quand $1,0 < R1/R2 \leq 1,2$, et
$1,15 < C1/C2 \leq 1,30$ quand $1,2 < R1/R2 \leq 1,5$.

5. Bloc-batterie (1) selon l'une quelconque des revendications 1 à 4, dans lequel une capacité thermique spécifique $\beta1$ du premier élément de batterie (11) et une capacité thermique spécifique $\beta2$ du second élément de batterie (12) vérifient : $0,10 \leq \beta1/\beta2 \leq 0,99$, et vérifient éventuellement $0,3 \leq \beta1/\beta2 \leq 0,95$.

6. Bloc-batterie (1) selon l'une quelconque des revendications 1 à 5, dans lequel les premiers éléments de batterie (11) et les seconds éléments de batterie (12) sont connectés en série ou en parallèle ou en série-parallèle.

7. Bloc-batterie (1) selon l'une quelconque des revendications 2 à 6, dans lequel les premiers éléments de batterie (11) sont disposés à proximité des parois latérales du boîtier de bloc-batterie (20).

8. Bloc-batterie (1) selon l'une quelconque des revendications 1 à 7, dans lequel les premiers éléments de batterie (11) et les seconds éléments de batterie (12) sont des éléments de batterie dotés du même système chimique.

9. Dispositif consommateur d'énergie, comprenant le bloc-batterie (1) selon l'une quelconque des revendications 1 à 8.

*FIG. 1*

*FIG. 2*

11 (12)

*FIG. 3*

1A

*FIG. 4*

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012160283 A
- US 2021391619 A1
- DE 102018217387 A1